# EUROPEAN PATENT APPLICATION

(11) **EP 4 386 947 A1**
(43) Date of publication of application: **19.06.2024**
(21) Application number: 22942143.3
(22) Date of filing: 20.05.2022
(51) Int. Cl.: H01M 50/107, H01M 10/0587, H01M 50/166

(54) **HOUSING, BATTERY CELL, BATTERY, AND ELECTRIC DEVICE**

(71) Applicant: Contemporary Amperex Technology Co., Limited, Ningde, Fujian 352100 (CN)
(72) Inventor: CHEN, Wei, Ningde, Fujian 352100 (CN); LI, Chuan, Ningde, Fujian 352100 (CN); ZHENG, Donglai, Ningde, Fujian 352100 (CN); ZOU, Qifan, Ningde, Fujian 352100 (CN)
(74) Representative: Frick, Robert
(86) International application number: PCT/CN2022/094158
(87) International publication number: WO 2023/221104

(57) **Abstract**

Embodiments of the present application provide a shell, a battery cell, a battery, and an electricity consuming device. The shell includes a body part, a thickened part connected to the body part and arranged at the opening of the shell, at least a portion of the thickened part having a wall thickness larger than that of the body part, in which the thickened part is provided with a support part for supporting the cover that closes the opening. With the thickened part disposed in the shell in the embodiments of the present application, the size of the support part can be reasonably tailored to ensure the support effect for the cover. Moreover, even if the support part is formed by grooving on the shell to support the cover that covers and closes the opening, the remaining size of the thickened part after the formation of the support part can still be large, which can improve the structural strength of the shell and thereby improve the deformation problem of the shell. Furthermore, due to the still large remaining size of the thickened part after the formation of the support part, when the cover is welded to the thickened part provided with the support part, the welding strength of the shell and the cover can be enhanced.

## Description

### TECHNICAL FIELD

The present application relates to the field of battery, particularly a shell, a battery cell, a battery, and an electricity consuming device.

### BACKGROUND

Energy conservation and emission reduction are key to the sustainable development of the automotive industry, and electric vehicle has become an important component of the sustainable development of the automotive industry due to its advantages in energy conservation and environmental protection. For electric vehicle, battery technology is also an important factor related to its development.

In the existing battery manufacturing process, the shell of the battery cell is used to support the cover, which may result in insufficient structural strength of the shell of the battery cell and the problem of easy deformation of the shell.

### SUMMARY

In view of the above issue, the present application provides a shell, a battery cell, a battery and an electricity consuming device that can alleviate the deformation problem caused by insufficient structural strength of the shell.

In the first aspect, the present application provides a shell, comprising a body part and a thickened part connected with the body part, and the thickened part is arranged at an opening of the shell, at least a portion of the thickened part having a wall thickness larger than that of the body part, wherein, the thickened part is provided with a support part configured to support a cover that close the opening.

In the technical solution of the embodiment of the present application, the size of the support part can be reasonably tailored to ensure the support effect on the cover. Moreover, even if the support part is formed by grooving on the shell to support the cover that covers and closes the opening, the remaining size of the thickened part after the formation of the support part can still be large, which can improve the structural strength of the shell and thereby improve the deformation problem of the shell. Furthermore, due to the still large remaining size of the thickened part after the formation of the support part, when the cover is welded to the thickened part provided with the support part, the welding strength of the shell and the cover can be enhanced. In some embodiments, the thickened part includes a first part and a second part, the first part is located between the second part and the body part, and the wall thickness of the second part is smaller than that of the first part to form a support part. By making the thickness of the second part smaller than the wall thickness of the first part, a stepped support part can be formed between the first and second parts, thereby providing support to the cover.

In some embodiments, the support part is located on the inner side of the shell. The edge of the cover overlaps with the support part inside the shell so that the cover and the shell can be welded from the upper side of the cover, which facilitates operation.

In some embodiments, the support part includes a support surface for supporting the cover, and the extension size of the support surface along the circumference of the opening is 0.05mm-2mm. When the extension size of the support surface is within the above range, it can avoid insufficient support capacity caused by the too small size of the support surface to support the cover, and it can also avoid affecting the structural strength of the shell by the overlarge size of the support surface.

In some embodiments, the outer surface of the first part and the outer surface of the second part are coplanar. On the one hand, it can simplify the shape of the shell and facilitate its preparation and molding. On the other hand, it can reduce the protrusion on the outer surface of the shell and improve the problem of the shell being prone to collision and deformation.

In some embodiments, the outer surface of the body part is recessed towards the interior of the shell relative to the outer surface of the thickened part. By thickening the opening of the shell on the outer side of the shell, a thickened part is formed to facilitate the manufacturing and molding of the shell.

In some embodiments, the thickened part and the body part are connected through a first transition part, and the wall thickness of the first transition part gradually increases along a direction from the body part to the thickened part. By disposing the first transition part with gradually increasing thickness, the problem of stress concentration caused by sudden changes in the wall thickness of the shell can be improved, and the problem of scratching caused by the formation of large size of edges and corners on the outer surface of the shell can be improved.

In some embodiments, the inner surface of the body part, the inner surface of the first transition part, and the inner surface of the second part are coplanar. It can ensure the flatness of the inner surface of the shell, so that there is enough space inside the shell for disposing the electrode assembly.

In some embodiments, the extension size of the first transition part in a direction from the body part to the thickened part is 2mm~20mm. It can improve the stress concentration problem caused by sudden changes in the wall thickness of the shell due to the too small extension size of the first transition part, and also improve the waste of materials for preparing the first transition part due to the overlarge extension size of the first transition part. In some embodiments, the wall thickness of the first part is 0.6mm~1.2mm. When the wall thickness of the first part is within the above range, it can not only avoid deformation caused by insufficient shell strength due to insufficient wall thickness of the first part, but also avoid the occurrence of the stress concentration due to overlarge difference in the wall thickness between the first part and the body part caused by the overlarge wall thickness of the first part, and thus avoid affecting the structural strength of the shell.

In some embodiments, the wall thickness of the second part is 0.4mm~1.0mm. When the wall thickness of the second part is within the above range, it can prevent the wall thickness of the second part from being too small, resulting in insufficient welding strength between the second part and the cover when the second part and the cover are welded. It can also avoid the waste of material preparation caused by overlarge wall thickness of the second part.

In some embodiments, the wall thickness of the body part is 0.5mm~1.0mm. When the wall thickness of the body part is within the above range, it can not only avoid deformation of the shell due to insufficient strength caused by insufficient wall thickness of the body part, but also avoid affecting energy density by the overlarge wall thickness of the body part.

In some embodiments, a ratio of the wall thickness of the first part to the wall thickness of the body part is 1-1.5. When the wall thickness of the first part and the wall thickness of the body part meet the above ratio, it can not only avoid deformation due to insufficient shell strength caused by insufficient wall thickness of the first part, but also avoid the occurrence of the stress concentration due to overlarge difference in wall thickness between the first part and the body part caused by the overlarge wall thickness of the first part, and thus avoid affecting the structural strength of the shell.

In some embodiments, the total extension size of the thickened part in a direction from the body part to the thickened part is 2mm~12mm. When the total extension size of the thickened part in the direction from the body part to the thickened part is within the above range, it can avoid the size of the thickened part being too small and cannot provide enough space to dispose the support part. When the shell is used for the battery cell, it can also avoid affecting the energy density of the battery cell by the overlarge size of the thickened part.

In some embodiments, the shell includes multiple side plates connected to each other, the body part, the thickened part, and a support part are arranged in at least one side plate. When the shell includes multiple side plates, at least one of the side plates is provided with a thickened part, which can provide support to the cover through the support part and also improve the deformation problem of the shell caused by insufficient shell strength.

In some embodiments, the multiple side plates include a first side plate and a second side plate that are connected to each other. The body part, the thickened part, and the support part are arranged in the first side plate, and the second side plate includes a first plate part and a second plate part located on the side of the first plate part facing the opening. The thickness of the first plate part is smaller than that of the second plate part.

In these embodiments, in the first and second side plates connected to each other, the thickened part is arranged in the first side plate to improve the structural strength of the first side plate. The second side plate is provided with a first plate part and a second plate part with different thicknesses. The smaller thickness of the first plate part can save preparation materials, and the second plate part is disposed close to the opening to improve the structural strength of the shell at the position of the opening, thereby making the shell less prone to deformation.

In some embodiments, the inner surface of the first plate part is recessed towards the exterior of the shell relative to the inner surface of the second plate part. When the shell is used in the battery cell and accommodates the electrode assembly, the first plate part is disposed away from the opening, the first plate part is close to the position where the electrode assembly is disposed, and the first plate part is recessed toward the exterior of the shell to leave enough space for the electrode assembly to be disposed, thereby improving the energy density of the battery cell.

In some embodiments, the outer surface of the first plate part and the outer surface of the second plate part are coplanar, which can improve the flatness of the outer surface of the shell. When used for the battery cell, the shells can be arranged adjacent to each other through the second side plate, which can reduce the spacing between adjacent two battery cells and reduce the total space size occupied by multiple battery cells.

In some embodiments, the area of the first side plate is smaller than the area of the second side plate. That is, the thickened part and the support part are disposed in the first side plate with a smaller area. When the shell is used for the battery cell, the adjacent two battery cells can be opposite to each other through the side plates with large area.

In some embodiments, the first plate part and the second plate part are connected through a second transition part, and the wall thickness of the second transition part gradually increases in the direction from the first plate part to the second plate part. By disposing a second transition part, stress concentration caused by sudden changes in thickness between the first plate part and the second plate part can be improved. At the same time, it can also improve the problem that large edges and corners occurs due to sudden changes in thickness between the first and second plate parts so that the shell is scratched easily or the shell scratches the electrode assembly located inside the shell easily.

In some embodiments, the extension size of the second plate part in the direction from the first plate part to the second plate part is 2~10mm. It can not only improve the structural strength of the shell affected by insufficient size of the second plate part, but also improve the energy density of the battery cell due to the overlarge size of the second plate part.

In some embodiments, the extension size of the second transition part in the direction from the first plate part to the second plate part is 1.5mm~20mm. It can not only improve the sudden change in thickness between the first and second plate parts caused by the insufficient size of the second transition part, but also improve the energy density of the battery cell affected due to the overlarge size of the second transition part.

In some embodiments, the wall thickness of the second plate part is 0.4mm~1.0mm, and/or the wall thickness of the first plate part is 0.3mm~1.0mm. When the wall thickness of the second and/or first plate parts is within the above range, it can not only improve the insufficient strength of the shell structure due to insufficient thickness of the second plate part and/or the first plate part, but also improve the energy density of the battery cell affected due to overlarge thickness of the second plate part and/or the first plate part.

In some embodiments, the difference in wall thickness between the second and first plate parts is 0.1mm~0.5mm, and/or a ratio of wall thickness between the second and first plate parts is 1-1.5. It can not only improve the problem of the occurrence of stress concentration caused by the overlarge difference in thickness between the first and second plate parts, but also improve the insufficient strength of the shell caused by the too small difference in thickness between the first and second plate parts.

In the second aspect, the embodiments of the present application also provide a battery cell including: a cover; and the shell of any of the embodiments in the first aspect mentioned above, the support part of the shell supports the cover. In some embodiments, the shell includes a first side plate and a second side plate arranged circumferentially around the opening and connected to each other, the body part, the thickened part, and the support part are arranged in the first side plate, and the second side plate includes a first plate part and a second plate part located on the side of the first plate part facing the opening. The thickness of the first plate part is less than the thickness of the second plate part.

The battery cell further includes an electrode assembly located in the accommodating chamber, and the projection of the electrode assembly and the projection of the second plate part do not overlap in a direction perpendicular to the second side plate.

In these embodiments, by making the projection of the electrode assembly and the projection of the second plate part not overlap, the thickening second plate part and the electrode assembly are misaligned, and the second plate part will not interfere with the electrode assembly.

In the third aspect, the embodiments of present application further provide a battery including a casing and a battery cell provided by any of the embodiments in the second aspect mentioned above, wherein the battery cell is accommodated within the casing.

In the fourth aspect, the embodiments of the present application further provide an electricity consuming device, including a battery cell provided by any of the embodiments in the second aspect mentioned above, the battery cell is used to provide electrical energy.

The above description is only a brief explanation of the technical solution of present application. Below specific embodiments of the present application are described in order to make the technical means of present application better understood so that it can be implemented according to the disclosure of the specification, and to make the above and other purposes, features, and advantages of the present application more obvious and understandable.

### BRIEF DESCRIPTION OF THE DRAWINGS

By reading the detailed description of the preferred embodiments below, various other advantages and benefits will become clear to the skilled person in the art. The accompanying drawings are only intended to illustrate the preferred embodiments and are not considered to be a limitation for the present application. And throughout the entire figures, the same reference signs are used to represent the same components. In the accompanying drawings:
Fig. 1 is a structural schematic diagram of the vehicle provided in an embodiment of the present application;
Fig. 2 is a structural schematic diagram of the battery provided in an embodiment of the present application;
Fig. 3 is a structural schematic diagram of the battery provided in another embodiment of the present application;
Fig. 4 is a structural schematic diagram of a battery module provided in an embodiment of the present application;
Fig. 5 is a structural schematic diagram of a battery module provided in another embodiment of the present application;
Fig. 6 is an exploded structural schematic diagram of a battery cell provided in an embodiment of the present application;
Fig. 7 is an exploded structural schematic diagram of a battery cell provided in another embodiment of the present application;
Fig. 8 is a structural schematic diagram of a shell provided in an embodiment of the present application;
Fig. 9 is a cross-sectional view along the M line in Fig. 8;
Fig. 10 is a cross-sectional view of the electrode assembly in a width direction of the shell after being accommodated inside the shell;
Fig. 11 is a structural schematic diagram of a shell provided in another embodiment of the present application;
Fig. 12 is a schematic diagram of the partially enlarged structure at I in Fig. 9;
Fig. 13 is a schematic diagram of the partially enlarged structure at II in Fig. 10.

The reference signs in the specific implementation method are as follows:
1 vehicle, 10 battery, 11 controller, 12 motor;
20 battery module, 21 bus component;
30 casing, 301 first casing part, 302 second casing part;
40 battery cell, 41 cover, 411 electrode terminal, 42 shell, 42a first side plate, 42b second side plate, 421 body part, 422 thickened part, 422a first part, 422b second part, 423 support part, 423a support surface, 424 first transition part, 425 first plate part, 426 second plate part, 427 second transition part, 428 accommodating space, 43 electrode assembly;
X first direction, Y second direction, Z height direction.

### DETAILED DESCRIPTION

The following will provide a detailed description of the embodiments of the technical solution of the present application in conjunction with the accompanying drawings. The following embodiments are only used to provide a clearer explanation of the technical solution of the present application, and therefore are only examples and cannot be used to limit the scope of protection of the present application.

It should be noted that, unless otherwise specified, the technical or scientific terms used in the embodiments of the present application shall have the usual meaning understood by the skilled person in the art to which the embodiments belong.

In the description of the embodiments of the present application, the orientation or positional relationship indicated by the technical terms "center", "vertical", "horizontal", "length", "width", "thickness", "up", "bottom", "front", "back", "left", "right", "vertical", "horizontal", "top", "bottom", "inside", "outside", "clockwise", "counterclockwise", "axial direction", "radial direction ", "circumferential direction", etc.is based on the orientation or positional relationship shown in the attached drawings, and is only for the convenience of describing the embodiments of the present application and simplifying the description, rather than indicating or implying that the device or component referred to must have a specific orientation, be constructed and operated in a specific orientation. Therefore, it cannot be understood as a limitation for the embodiments of the present application.

In addition, the technical terms "first", "second", etc. are only used for descriptive purposes and cannot be understood as indicating or implying relative importance or implying the quantity of indicated technical features. In the description of the embodiments of the present application, the meaning of "multiple" refers to two or more, unless otherwise specified.

In the description of the embodiments of the present application, unless otherwise specified and limited, the technical terms "install", "connected with", "connect", "fix" and other terms should be broadly understood, for example, they can be fixed connection, detachable connection, or be integrated. It can also be a mechanical connection or an electrical connection. It can be directly connected or indirectly connected through an intermediate medium, and it can be an internal communication between two components or an interaction relationship between two components. For the skilled person in the art, the specific meanings of the above terms in the embodiments of the present application can be understood based on specific circumstances.

In the description of the embodiments of the present application, unless otherwise specified and limited, the first feature "on" or "under" the second feature can indicate that the first feature is in direct contact with the second feature, or the first feature may be in indirect contact with the second feature through intermediate media. Moreover, the first feature "above" the second feature can indicate that the first feature is directly or diagonally above the second feature, or simply indicates that the horizontal height of the first feature is larger than that of the second feature. The first feature "below" the second feature can indicate that the first feature is directly or diagonally below the second feature, or simply indicates that the horizontal height of the first feature is less than that of the second feature.

At present, based on the development of the market situation, the application of power battery is becoming increasingly widespread. Power battery is not only used in energy storage power systems such as hydropower, firepower, wind power, and solar power plant, but also widely used in electric vehicle such as electric bicycle, electric motorcycle, and electric automobile, as well as in various fields such as military equipment and aerospace. With the continuous expansion of the application field of power battery, its market demand is also constantly expanding.

In the present application, the battery cell can include lithium-ion secondary battery cell, lithium-ion primary battery cell, lithium-sulfur battery cell, sodium lithium ion battery cell, sodium ion battery cell, or magnesium ion battery cell. The embodiments of present application are not limited to thereto. The battery cell can be in cylindrical, flat, rectangular, or other shapes, and the embodiments of the present application are not limited to thereto.

The battery mentioned in the embodiment of the present application refers to a single physical module that includes one or more battery cells to provide higher voltage and capacity. For example, the battery mentioned in the present application may include battery module or battery pack, etc. Battery generally include a casing used to encapsulate one or more battery cells. The casing can prevent liquid or other foreign objects from affecting the charging or discharging of the battery cell.

The battery cell includes an electrode assembly and an electrolyte, and the electrode assembly includes a positive electrode plate, a negative electrode plate, and a separator. The battery cell mainly relies on metal ions moving between the positive and negative electrode plates to operate. The positive electrode plate includes a positive electrode current collector and a positive electrode active substance layer which is applied on a portion of the surface of the positive electrode current collector. The positive electrode current collector includes a positive electrode current collecting part and a positive electrode tab connected to the positive electrode current collecting part. The positive electrode current collecting part is applied with a positive electrode active substance layer, while the positive electrode tab is not applied with a positive electrode active substance layer. Taking the lithium-ion battery as an example, the material for the positive electrode current collector can be aluminum, and the positive electrode active material layer includes the positive electrode active material. The positive electrode active material can be lithium cobalt oxide, lithium iron phosphate, ternary lithium, or lithium manganese oxide. The negative electrode plate includes a negative electrode current collector and a negative electrode active material layer which is applied on a portion of the surface of the negative electrode current collector. The negative electrode current collector includes a negative electrode current collecting part and a negative electrode tab connected to the negative electrode current collecting part. The negative electrode current collecting part is applied with a negative electrode active substance layer, while the negative electrode tab is not applied with a negative electrode active substance layer. The material for the negative electrode current collector can be copper, and the negative electrode active material layer includes the negative electrode active material. The negative electrode active material can be carbon or silicon, etc. The material of the separator can be PP (polypropylene) or PE (polyethylene), etc.

The inventors noticed that in the battery cell, the battery cell includes a shell and a cover disposed at the opening of the shell in a covering manner. In order for the cover covering and closing the shell better, a groove will be made at the position of the opening of the shell to provide a limit for the cover. This leads to the problem that the structural strength at the position of the opening of the shell is insufficient, so that the shell is prone to deformation.

In order to alleviate the problem of deformation caused by insufficient shell strength, the applicant has found that local or overall thickening can be carried out at the position of the opening of the shell to improve the structural strength of the shell.

Based on the above considerations, in order to solve the problem of deformation caused by insufficient strength of the shell of the battery cell, the inventors have conducted in-depth research and designed a shell of a battery cell. In such a shell, the shell includes a body part and a thickened part that is located on a side of the body part facing the opening of the shell, has a wall thickness larger than that of the body part, and is provided with a support part for supporting the cover.

The technical solution described in the embodiments of present application is applicable to the battery and the electricity consuming device using the battery.

The electricity consuming device can be vehicle, mobile phone, portable device, laptop, ship, spacecraft, electric toy, electric tool, and so on. The vehicle can be a fuel powered vehicle, a gas powered vehicle, or a new energy vehicle. The new energy vehicle can be a pure electric vehicle, a hybrid electric vehicle, or an extended range vehicle, etc. Spacecraft includes airplane, rocket, space shuttle, and spacecraft, among others. Electric toy includes fixed or mobile electric toy, such as game console, electric car toy, electric boat toy, and electric airplane toy. Electric tool includes metal cutting electric tool, grinding electric tool, assembly electric tool, and railway electric tool, such as electric drill, electric grinder, electric wrench, electric screwdriver, electric hammer, impact drill, concrete vibrator, and electric planer. The implementation example of present application does not impose special restrictions on the above-mentioned electricity consuming devices.

It should be understood that the technical solution described in the embodiments of present application is not only applicable to the battery and the electricity consuming device described above, but can also be applicable to all other batteries including the casing and the electricity consuming devices using the battery. However, for the sake of simplicity, the following embodiments are explained taking the electric vehicle as an example.

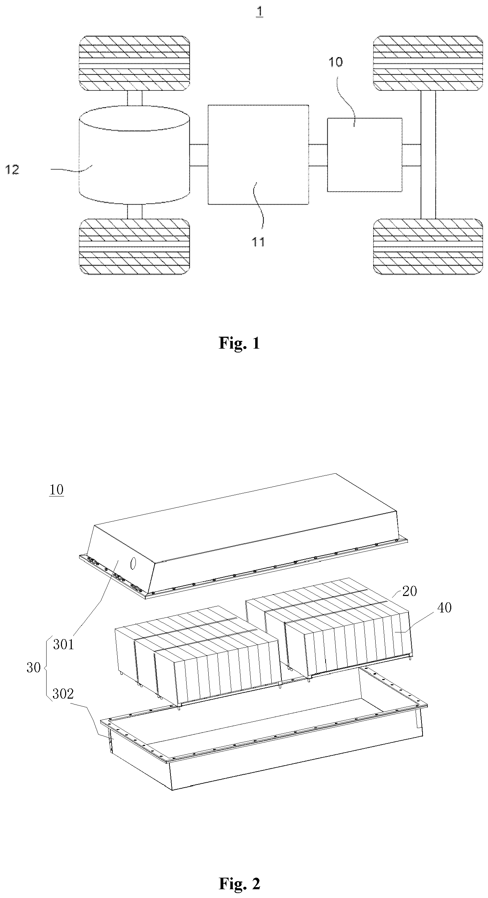

Please refer to Fig. 1, which is a structural schematic diagram of a vehicle 1 provided in some embodiments of the present application. The vehicle 1 can be a fuel powered vehicle, a gas powered vehicle, or a new energy vehicle. The new energy vehicle can be a pure electric vehicle, a hybrid electric vehicle, or an extended range vehicle, etc. The interior of the vehicle 1 is provided with a battery 10, which can be installed in the bottom, the front, or the rear of the vehicle 1. The battery 10 can be used for the power supply of the vehicle 1, for example, it can serve as the operating power supply of the vehicle 1. The vehicle 1 can also include a controller 11 and a motor 12, and the controller 111 is used to control the battery 10 to supply power to the motor 12, for example, for the starting, navigation, and operating power requirements of the vehicle 1.

In some embodiments of present application, the battery 10 can not only serve as the operating power source for the vehicle 1, but also as the driving power source for the vehicle 1, replacing or partially replacing the fuel or the natural gas to provide the driving power for the vehicle 1.

In order to meet different electricity consuming needs, the battery 10 can include multiple battery cells, which refer to the smallest unit that constitutes a battery module or battery pack. Multiple battery cells can be connected in series and/or in parallel through electrode terminals for various applications. The battery mentioned in the present application includes battery module or battery pack. Multiple battery cells can be connected in series, parallel, or hybrid, and hybrid connection refers to the combination of series connection and parallel connection. In the embodiments of the present application, multiple battery cells can directly form a battery pack, or they can first form a battery module 20, which then forms a battery pack.

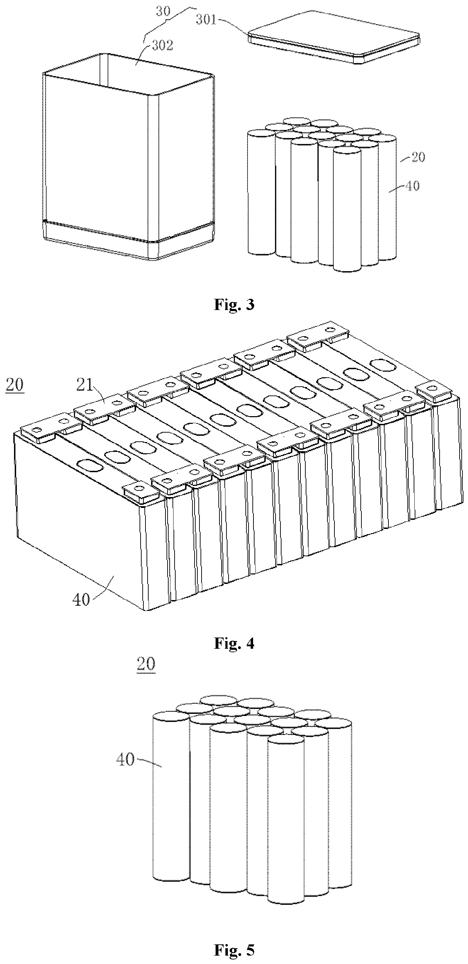

Please refer to Figs. 2 and 3, Fig, 2 illustrates the structural schematic diagram of the battery 10 in an embodiment of the present application. Fig. 3 shows a schematic diagram of the structure of the battery 10 in another embodiment of the present application. The difference between Fig. 2 and Fig. 3 is that the battery cell 40 in Fig. 2 is a square battery cell 40, while the battery cell 40 in Fig. 3 is a cylindrical battery cell 40.

As shown in Figs. 2 and 3, the battery 10 includes a casing 30 and a battery cell 40 which is accommodated within the casing 30.

The casing 30 can be a simple three-dimensional structure such as a single cuboid, cylinder, or sphere, or a complex three-dimensional structure composed of a combination of simple three-dimensional structures such as a cuboid, a cylinder, or a sphere. The embodiments of the present application are not limited to thereto. The material of the casing 30 can be alloy material such as aluminum alloy and iron alloy, or polymer material such as polycarbonate, polyisocyanurate foam plastic, or composite materials such as glass fiber and epoxy resin, but the embodiments of the present application are not limited thereto.

The casing 30 is used to accommodate the battery cell 40, and the casing 30 can be of various structures. In some embodiments, the casing 30 may include a first casing body 301 and a second casing body 302, with the first casing body 301 and the second casing body 302 covering each other. The first casing body 301 and the second casing body 302 jointly define an accommodating chamber for accommodating the battery cell 40. The second casing body 302 can be a hollow structure with an opening at one end, the first casing body 301 is a plate-like structure, and the first casing body 301 covers and closes the opening side of the second casing body 302 to form a casing 30 with an accommodating chamber. The first casing body 301 and the second casing body 302 can also be hollow structures with openings on one side. The opening side of the first casing body 301 covers and closes the opening side of the second casing body 302 to form a casing 30 with an accommodating chamber. Of course, the first casing body 301 and the second casing body 302 can have various shapes such as cylinder, cuboid.

To improve the sealing performance after connecting the first casing body 301 and the second casing body 302, sealing elements such as sealant, sealing rings, etc. can also be installed between the first casing body 301 and the second casing body 302.

Assuming that the first casing body 301 covers and closes the top of the second casing body 302, the first casing body 301 can also be referred to as the upper casing cover, and the second casing body 302 can also be referred to as the lower casing 30.

In a battery, there may be one or multiple battery cells 40. If multiple battery cells 40 are provided, multiple battery cells 40 can be connected in series, parallel, or hybrid. Hybrid connection refers to both series and parallel connection among multiple battery cells 40. Multiple battery cells 40 can be directly connected in series, parallel, or hybrid together, and then the whole composed of multiple battery cells 40 can be accommodated in the casing 30. Of course, multiple battery cells 40 can also be connected in series, parallel, or hybrid to form a battery module 20. Multiple battery modules 20 can then be connected in series, parallel, or hybrid to form a whole and accommodated in the casing 30.

Please refer to Figs. 4 and 5, Fig. 4 illustrates the structural diagram of the battery module 20 in an embodiment of the present application. Fig. 5 shows a structural schematic diagram of the battery module 20 provided in another embodiment of the present application. The difference between Fig. 4 and Fig. 5 is that the battery module 20 in Fig. 4 is formed by a combination of square battery cells 40, while the battery module 20 in Fig. 5 is formed by a combination of cylindrical battery cells 40.

In some embodiments, as shown in Figs. 4 and 5, multiple battery cells 40 are provided. Multiple battery cells 40 are first connected in series, parallel, or hybrid to form a battery module 20. Multiple battery modules 20 are then connected in series, parallel, or hybrid to form a whole and accommodated within the casing.

Multiple battery cells 40 in the battery module 20 can be electrically connected through a bus component 21 to achieve parallel, series, or hybrid connection of multiple battery cells 40 in the battery module.

In the present application, the battery cell 40 can include lithium ion battery cell, sodium ion battery cell, or magnesium ion battery cell, etc. The embodiments of the present application are not limited to thereto. The battery cell 40 can be in shape of cylinder, flat body, cuboid, or other shapes, and the embodiments of the present application are not limited to thereto. The battery cell 40 is generally divided into three types according to packaging methods: cylindrical battery cell, square battery cell, and soft pack battery cell. The embodiments of the present application are not limited to thereto. However, for the sake of simplicity, the following embodiments are illustrated using square and cylindrical battery cells as examples.

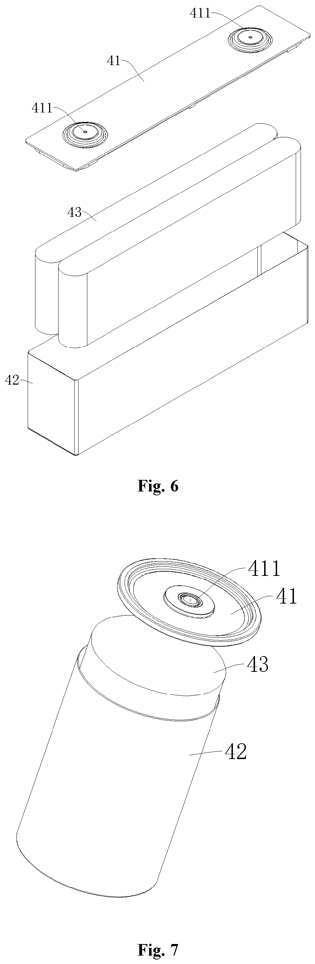

Please refer to Figs. 6 and 7 in which Fig. 6 is an exploded structural schematic diagram of the battery cell 40 provided in some embodiments of the present application, and Fig. 7 is an exploded structural schematic diagram of the battery cell 40 provided in other embodiments of the present application. The difference between Fig. 6 and Fig. 7 is that Fig. 6 shows an exploded structural schematic diagram of a square battery cell 40, while Fig. 7 shows an exploded structural schematic diagram of a cylindrical battery cell 40.

As shown in Figs. 6 and 7, the battery cell 40 refers to the smallest unit that constitutes the battery. The battery cell 40 includes a cover 41, a shell 42, and an electrode assembly 43.

The cover 41 refers to a component that covers and closes the opening of the shell 42 and isolates the internal environment of the battery cell 40 from the external environment. Unlimitedly, the shape of the cover 41 can adapt to the shape of the shell 42 to fit the shell 42. Optionally, the cover 41 can be made of a material with a certain hardness and strength (such as aluminum alloy), so that the cover 41 is less prone to deformation when subjected to compression and collision, enabling the battery cell 40 to have higher structural strength and improved safety performance. Functional components such as electrode terminals 411 can be disposed on the cover 41. The electrode terminal 411 can be electrically connected to the electrode assembly 43 for outputting or inputting electrical energy from or into the battery cell 40. In some embodiments, the cover 41 may further be provided with a pressure relief mechanism for releasing internal pressure when the internal pressure or temperature of the battery cell 40 reaches a threshold. The material of the cover 41 can also be various, such as copper, iron, aluminum, stainless steel, aluminum alloy and plastic. The embodiments of the present application does not impose special restrictions on this. In some embodiments, an insulation component can also be installed on the inner side of the cover 41, which can be used to isolate the electrical connection components inside the shell 42 from the cover 41 to reduce the risk of short circuit. For example, the insulation component can be plastic, rubber, etc.

The shell 42 is a component used to engage with the cover 41 to form an internal environment of the battery cell 40, wherein the formed internal environment can be used to accommodate the electrode assembly 43, the electrolyte (not shown in the figures), and other components. The shell 42 and the cover 41 can be independent components, and an opening can be disposed on the shell 42 to form the internal environment of the battery cell 40 by the cover 41 covering and closing the opening. Unlimitedly, the cover 41 and the shell 42 can also be integrated. Specifically, the cover 41 and the shell 42 can form a common connection surface before other components enter the shell. When it is necessary to encapsulate the interior of the shell 42, the cover 41 can then cover and close the shell 42. The shell 42 can be of various shapes in various sizes, such as a cuboid, cylinder, hexagonal prism. Specifically, the shape of the shell 42 can be determined based on the specific shape and size of the electrode assembly 43. The shell 42 can be made of various materials, such as copper, iron, aluminum, stainless steel, aluminum alloy, plastic, etc., and there are no special restrictions on this in the embodiments of present application.

The electrode assembly 43 is a component that electrochemical reaction occurs in the battery cell 40. The shell 42 may contain one or more electrode assemblies 43. The electrode assembly 43 is mainly formed by winding or stacking the positive and negative electrode plates, and usually has a separator between the positive and negative electrode plates. The parts of the positive and negative electrode plates that contain active substances form the body part of the electrode assembly 43, while the parts of the positive and negative electrode plates that do not contain active substances each form the electrode tabs (not shown in the figures). The positive and negative electrode tabs can be located at one end of the body part together or at two ends of the body part respectively. During the charging and discharging process of the battery, the positive and negative active substances react with the electrolyte, and the electrode tabs are connected to the electrode terminal 411 to form a current circuit.

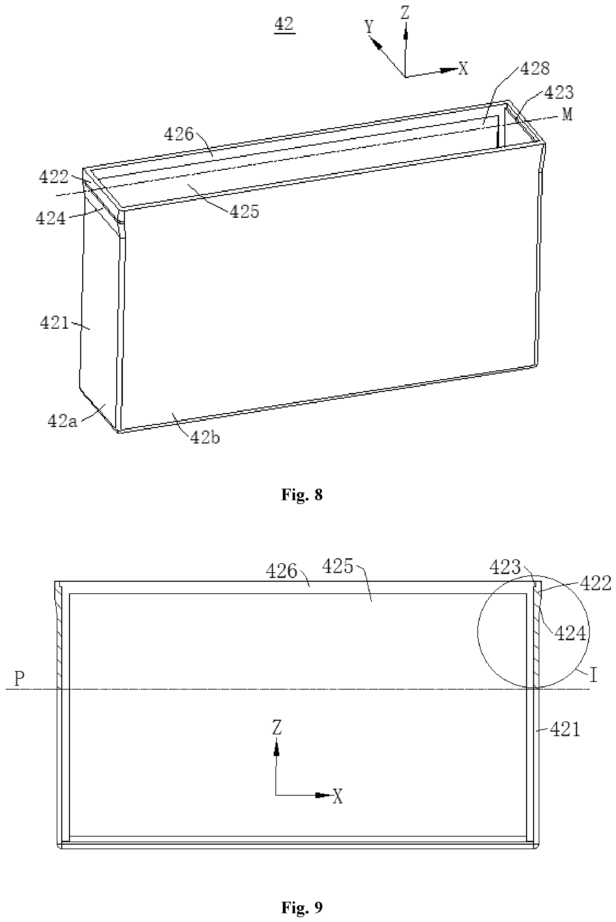

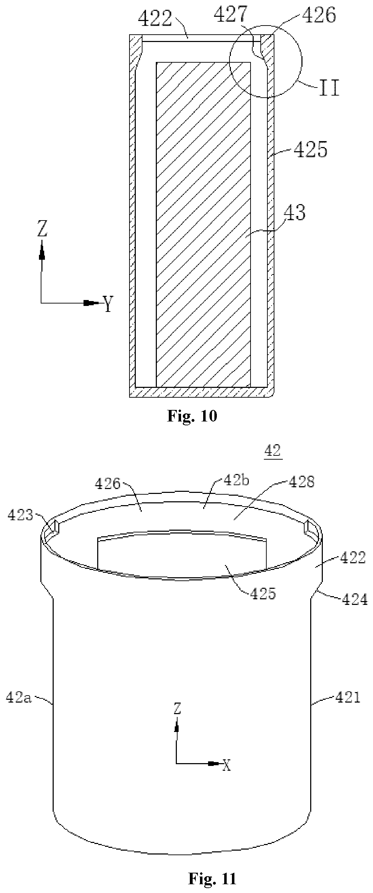

Please refer to Figs. 8 to 10. Fig. 8 is a structural schematic diagram of the shell 42 provided in some embodiments of the present application. Fig. 9 is a partial cross-sectional view along M line in Fig. 8, and the parts below P line in Fig. 9 are not cross-sectional. Fig. 10 is a cross-sectional view of the electrode assembly in the width direction of the shell after being accommodated inside the shell.

Please continue to refer to Fig. 11, which is a structural schematic diagram of the shell 42 provided in other embodiments of the present application. The difference between Fig. 8 and Fig. 11 is that Fig. 8 is a structural schematic diagram of the shell 42 for a square battery cell, while Fig. 11 is a structural schematic diagram of the shell 42 used for a cylindrical battery cell.

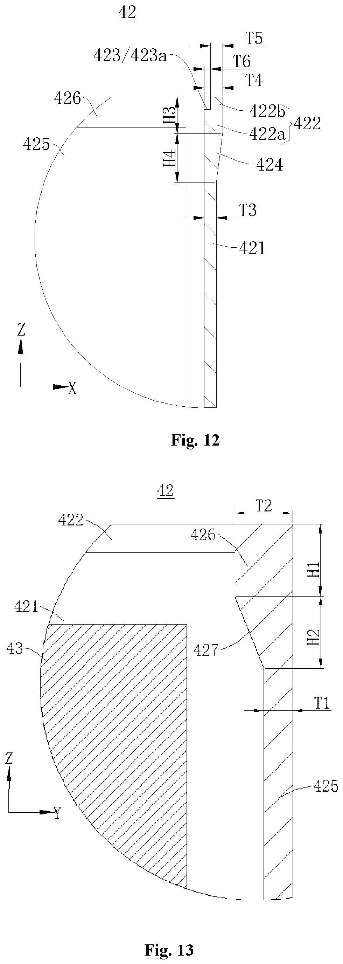

Please continue to refer to Figs. 12 and 13, Fig. 12 is a schematic diagram of the partially enlarged structure at I in Fig. 9, and Fig. 13 is a schematic diagram of the partially enlarged structure at II in Fig. 10.

As shown in Figs. 8 to 13, the shell 42 provided in the embodiment of the present application includes a body part 421 and a thickened part 422. The thickened part 422 and the body part 421 are connected to each other, and the thickened part 422 is arranged at the opening of the shell 42. The wall thickness of at least part of the thickened part 422 is larger than that of the body part 421; wherein the thickened part 422 is provided with a support part 423 which is used to support the cover 41that closes the opening.

When the shell 42 is used for a square battery cell, the shell 42 is a square shell, which includes four side walls and a bottom wall. The side walls of the shell 42 include multiple side plates connected with each other, and the body part 421 of the shell 42 can be a part of one of the side plates. The thickened part 422 is a part of the side plate near the opening, that is, the body part 421 and the thickened part 422 form a side plate of the shell 42. The support part 423 is a portion of the shell 42 used to support the cover 41.

When the shell 42 is used for a cylindrical battery cell, the shell 42 includes a cylindrical side wall and a bottom wall.

The body part 421 can be a large portion of the side wall, used to surround the electrode assembly 43 in a circumferential direction, and the body part 421 is a cylindrical shape that is circumferentially closed. The thickened part 422 is a side wall of the body part 421 near the opening and the thickened part 422 can also be a cylindrical shape that is circumferential closed. The support part 423 is a part of the thickened part 422 used to support the cover 41. The support part 423 can be arranged in a circular shape or multiple support parts 423 can be spaced along the circumference of the shell 42.

Alternatively, the body part 421 can be a part of the cylindrical sidewall in a circumferential direction, that is, the cylindrical sidewall is composed of multiple curved plates, the body part 421 is a part of one of the curved plates, and the body part 421 is an unclosed curved plate. At least one curved plate includes a body part 421, a thickened part 422 arranged in the side of the body part 421 facing the opening, and a support part 423 arranged in the thickened part 422. At least one curved plate is not provided with a thickened part 422.

In the technical solution of the embodiments of the present application, the shell 42 includes a body part 421 and a thickened part 422, and the supporting part 423 for supporting the shell 42 is arranged in the thickened part 422. With the thickened part 422 having a wall thickness larger than that of the body part 421. On the one hand, the size of the support part 423 can be reasonably disposed to ensure the support effect for the cover. Moreover, even if the support part 423 is formed by grooving on the shell 42 to support the cover that covers and closes the opening, the remaining size of the thickened part 422 after the formation of the support part 423 can still be large, which can improve the structural strength of the shell 42 and thereby improve the deformation problem of the shell 42. Furthermore, due to the still large remaining size of the thickened part 422 after the formation of the support part 423, when the cover is welded to the thickened part 422 provided with the support part 423, the welding strength of the shell 42 and the cover 41 can be enhanced.

There are various ways to connect the body part 421 and the thickened part 422, for example, the body part 421 and the thickened part 422 are welded to each other. Alternatively, the body part 421 and the thickened part 422 can be integrally formed to enhance the connection strength between the body part 421 and the thickened part 422.

The shell 42 includes an accommodating space 428, and the opening is in communication with the accommodating space 428. When the shell 42 is used for a battery cell and the battery cell includes an electrode assembly, the electrode assembly can be arranged in the accommodating space 428 through an opening.

The thickened part 422 is disposed at the opening of the shell 42, which means that the thickened part 422 is disposed to be closer to the opening of the shell 42 compared to the body part 421, that is, the thickened part 422 is located on a side of the body part 421 facing the opening.

According to some embodiments of the present application, with reference to Fig. 12, the thickened part 422 includes a first part 422a and a second part 422b. The first part 422a is located on a side of the second part 422b away from the opening, and the wall thickness of the second part 422b is smaller than that of the first part 422a to form a support part 423. The first part 422a is located on a side of the second part 422b away from the opening, so the second part 422b is disposed closer to the opening.

In these embodiments, by making the thickness of the second part 422b smaller than the wall thickness of the first part 422a, a stepped support part 423 can be formed between the first part 422a and the second part 422b, thereby enabling the support part 423 to provide support to the cover 41.

When the cover covers and closes the opening, there are various ways to dispose the shape of the cover, or the cover includes a covering part and a wall part connected to the circumference of the covering part, and the wall part is formed by extending along the thickness direction of the covering part. When the cover covers and closes the opening of the shell 42, the wall part overlaps with the support part 423.

There are various positions for disposing the support part 423, for example, the support part 423 is located on the outer side of the shell 42, so that the cover including a covering part and a wall part can be overlaps with the support part 423 through the wall part.

Alternatively, according to some embodiments of the present application, please continue to refer to Fig. 12, where the support part 423 is located on the inner side of the shell 42. In these embodiments, the edge of the cover overlaps with the support part 423 inside the shell 42, so that the cover and the shell can be welded from the upper side of the cover for convenient operation.

According to some embodiments of present application, with reference to Fig. 12, the support part 423 includes a support surface 423a for supporting the cover 41, and the extension size T6 of the support surface 423a along the opening circumference is 0.05mm-2mm. When the extension size T6 of the support surface 423a in the circumferential direction of the opening is within the above range, it can avoid the insufficient support capacity caused by the too small extension size T6 of the support surface 423a to support the cover, and also it can avoid affecting the structural strength of the shell 42 by the overlarge size T6 of the support surface 423a.

Optionally, as shown in Figs. 8 to 10, when the shell 42 is used for a square battery cell 40, the shell 42 includes a first side plate 42a and a second side plate 42b connected to each other, with two first side plates 42a arranged relative to each other in the first direction X, and two second side plates 42b arranged relative to each other in the second direction Y, and the circumferential direction of the opening includes the first direction X and/or the second direction Y. For example, the support part 423 is arranged in the first side plate 42a, and the circumferential direction of the opening is perpendicular to the first side plate 42a, i.e., the first direction X. When the support part 423 is arranged in the second side plate 42b, the circumferential direction of the opening is perpendicular to the second side plate 42b, i.e., the second direction Y

Optionally, as shown in Fig. 11, when the shell 42 is used for a cylindrical battery cell 40, the circumferential direction of the opening is the circumferential direction of the shell 42.

According to some embodiments of the present application, as shown in Fig. 12, the outer surface of the first part 422a and the outer surface of the second part 422b are coplanar. On the one hand, it can simplify the shape of shell 42 and facilitate its preparation and molding of the shell 42. On the other hand, it can reduce the protrusion on the outer surface of shell 42 and improve the problem of shell 42 being prone to collision and deformation.

The outer surface of the first part 422a refers to the surface of the first part 422a facing away from the accommodating space 428. Similarly, the outer surface of the second part 422b refers to the surface of the second part 422b facing away from the accommodating space 428.

Optionally, as shown in Figs. 8 to 10 and 12, when the shell 42 is used for a square battery cell, the outer surface of the first part 422a can include a plane, the outer surface of the second part 422b can also include a plane, and the outer surface of the first part 422a and the outer surface of the second part 422b are located in the same plane.

Optionally, as shown in Figs. 11 and 12, when the shell 42 is used for a cylindrical battery cell, the outer surface of the first part 422a is an arc-shaped surface, and the outer surface of the second part 422b is an arc-shaped surface. The outer surface of the first part 422a and the outer surface of the second part 422b are coplanar, that is, the curvature of the outer surface of the first part 422a is the same as that of the outer surface of the second part 422b.

According to some embodiments of the present application, as shown in Fig. 12, the outer surface of the body part 421 is arranged to be recessed towards the interior of the shell 42 relative to the outer surface of the thickened part 422.

The outer surface of the body part 421 is the surface of the body part 421 facing away from the accommodating space 428, while the outer surface of the thickened part 422 refers to the surface of the thickened part 422 facing away from the accommodating space. The outer surface of the body part 421 is recessed towards the interior of the shell 42 relative to the outer surface of the thickened part 422, that is, the outer surface of the body part 421 is recessed towards the direction near the accommodation space relative to the outer surface of the thickened part 422. The outer surface of the body part 421 is located on the side of the outer surface of the thickened part 422 towards the accommodation space.

In these embodiments, at least a portion of the thickened part 422 is located on the outer side of the body part 421 facing the shell 42. By thickening outside the shell 42 to form the thickened part 422, the influence of the thickened part 422 on the internal space of the shell 42 can be improved. When the shell 42 is used for the battery cell and accommodates the electrode assembly, sufficient space is provided within the shell 42 for disposing the electrode assembly, thereby improving the influence of the thickened part 422 on the energy density of the battery cell 40.

According to some embodiments of the present application, as shown in Fig. 12, the thickened part 422 and the body part 421 are connected through the first transition part 424, and the wall thickness of the first transition part 424 gradually increases along the direction from the body part 421 to the thickened part 422.

In these embodiments, the direction from the body part 421 to the thickened part 422 is along the height direction Z of the shell 42. By disposing the first transition part 424 with gradually increasing thickness, the problem of stress concentration caused by sudden changes in wall thickness of the shell 42 can be improved, and the problem of being scratched easily caused by the large size of edges and corners formed on the shell 42 can be improved.

There are various connection ways between the first transition part 424 and the body part 421. The first transition part 424 can be welded with the body part 421, or the first transition part 424 can be disposed to be integrally formed with the body part 421. Similarly, there are various connection ways between the first transition part 424 and the thickened part 422. The first transition part 424 can be welded with the thickened part 422, or the first transition part 424 can be disposed to be integrally formed with the thickened part 422.

Optionally, the first transition part 424, the body part 421, and the thickened part 422 are integrally formed, which can improve the stability of the connection between the first transition part 424 and the body part 421 and between the first transition part 424 and the thickened part 422, and simplify the preparation of the shell 42.

According to some embodiments of the present application, as shown in Fig. 12, the inner surface of the body part 421, the inner surface of the first transition part 424, and the inner surface of the second part 422b are coplanar.

In these embodiments, the inner surfaces of the body part 421, the first transition part 424, and the second part 422b are coplanar, which can ensure the flatness of the inner surface of the shell 42 and provide sufficient space for disposing the electrode assembly inside the shell 42.

The inner surface of the body part 421 refers to the surface of the body part 421 facing the accommodating space. The inner surface of the first transition part 424 refers to the inner surface of the first transition part 424 facing the accommodating space. The inner surface of the second part 422b refers to the inner surface of the second part 422 facing the accommodating space.

Optionally, as shown in Figs. 8 to 10 and 12, when the shell 42 is used for a square battery cell, the inner surfaces of the body part 421, the first transition part 424, and the second part 422b are all flat, and the inner surfaces of the body part 421, the first transition part 424, and the second part 422b are located on the same surface.

Optionally, as shown in Figs. 11 to 12, when the shell 42 is used for a cylindrical battery cell, the inner surfaces of the body part 421, the first transition part 424, and the second part 422b are all curved surfaces, and the inner surfaces of the body part 421, the first transition part 424, and the second part 422b have the same curvature.

According to some embodiments of the present application, as shown in Fig. 12, the extension size H4 of the first transition part 424 in the direction from the body part 421 to the thickened part 422 is 2mm~20mm.

In these embodiments, when the extension size H4 of the first transition part 424 in the height direction Z is within the above range, it can not only improve the stress concentration problem caused by the sudden change in wall thickness of the shell 42 due to the too small extension size H4 of the first transition part 424, but also improve the waste of material for preparing the first transition part 424 due to the overlarge extension size H4 of the first transition part 424.

According to some embodiments of the present application, as shown in Fig. 12, the wall thickness T4 of the first part 422a is 0.6mm~1.2mm.

In these embodiments, when the wall thickness T4 of the first part 422a is within the above range, it can not only avoid insufficient strength and deformation of the shell 42 due to insufficient wall thickness T4 of the first part 422a, but also avoid the occurrence of stress concentration due to overlarge difference in the wall thickness between the first part 422a and the body part 421 caused by overlarge wall thickness T4 of the first part 422a, and thus avoid affecting the structural strength of the shell 42.

In some embodiments, as shown in Fig. 12, the wall thickness T5 of the second part 422b is 0.4mm~1.0mm. When the wall thickness T5 of the second part 422b is within the above range, it can avoid the wall thickness T5 of the second part 422b being too small, resulting in insufficient welding strength therebetween when the second part 422b is welded with the cover. It can also avoid the waste of preparation material caused by the overlarge wall thickness T5 of the second part 422b.

According to some embodiments of the present application, as shown in Fig. 12, the wall thickness T3 of the body part 421 is 0.5mm~1.0mm. When the wall thickness T3 of the body part 421 is within the above range, it can not only avoid insufficient strength and deformation of the shell 42 due to insufficient wall thickness T3 of the body part 421, but also avoid affecting energy density by the overlarge wall thickness T3 of the body part 421.

According to some embodiments of the present application, as shown in Fig. 12, the ratio of wall thickness T4 of the first part 422a to wall thickness T3 of the body part 421 is 1-1.5. When the wall thickness T4 of the first part 422a and the wall thickness T3 of the body part 421 meet the above ratio, it can not only avoid insufficient strength and deformation of the shell 42 due to insufficient wall thickness T4 of the first part 422a, but also avoid the occurrence of stress concentration due to overlarge difference in the wall thickness between the first part 422a and the body part 421 caused by overlarge wall thickness T4 of the first part 422a, and thus avoid affecting the structural strength of the shell 42.

According to some embodiments of the present application, as shown in Fig. 12, the extension size H3 of the thickened part 422 in the direction from the body part 421 to the thickened part 422 is 2mm~12mm.

In these embodiments, when the extension size H3 of the thickened part 422 in the height direction Z is within the above range, it can avoid the extension size H3 of the thickened part 422 being too small, which cannot provide enough space to dispose the support part 423. When the shell 42 is used for a battery cell, it can also avoid affecting the energy density of the battery cell by the overlarge extension size H3 of the thickened part 422.

According to some embodiments of the present application, the shell 42 includes multiple side plates connected to each other, and the body part 421, the thickened part 422, and the support part 423 are arranged in at least one side plate. When the shell 42 includes multiple side plates, at least one of the side plates is provided with a thickened part 422, which can provide support to the cover through the support part 423 and also improve the deformation problem of the shell 42 caused by insufficient strength of the shell 42.

Optionally, as shown in Figs 8 to 10, when the shell 42 is used for a square battery cell 40, multiple side plates can be considered as side plates located on different planes on the shell 42.

Alternatively, as mentioned above, as shown in Fig. 11, when the shell 42 is used for a cylindrical battery cell, the shell 42 can be a cylindrical casing, and the shell 42 can include side walls arranged around the accommodating space 428. Optionally, the multiple side plates can be considered as different portions of the side wall located on the circumference of the shell 42. For example, at least a portion of the side wall in the circumferential direction of the accommodating space 428 includes a body part 421, a thickened part 422, and a support part 423. Furthermore, the two opposite parts of the side wall each include the body part 421, the thickened part 422, and the support part 423, thus forming two support parts 423 that are arranged oppositely. These two support parts 423 can provide stable support for the cover 41.

According to some embodiments of the present application, as shown in Figs. 8 to 13, multiple side plates include a first side plate 42a and a second side plate 42b that are connected to each other. The body part 421, the thickened part 422, and the support part 423 are arranged in the first side plate 42a. The second side plate 42b includes a first plate part 425 and a second plate part 426 located on the side of the first plate part 425 facing the opening. The thickness of the first plate part 425 is less than that of the second plate part 426.

In these embodiments, in the first and second side plates 42a and 42b connected to each other, a thickened part 422 is provided in the first side plate 42a to improve the structural strength of the first side plate 42a. The second side plate 42b is provided with a first plate part 425 and a second plate part 426 with different thicknesses. The thickness of the first plate part 425 is relatively small, which can save preparation material. The second plate part 426 is arranged close to the opening, which can improve the structural strength of the shell 42 at the position of the opening, thereby making the shell 42 less prone to deformation.

Optionally, as shown in Figs. 8 to 10, when the shell 42 is used for a square battery cell, the first side plate 42a and the second side plate 42b can be considered as two side plates located in different planes and connected to each other.

Optionally, as shown in Fig. 11, when the shell 42 is used for a cylindrical battery cell, the first side plate 42a and the second side plate 42b can be parts of the side wall in different regions in a circumferential direction.

Optionally, the shell 42 includes two first side plates 42a arranged opposite to each other in the first direction X, and both of the two first side plates 42a are provided with a body part 421, a thickened part 422, and a support part 423, enabling the formation of two support parts 423 arranged opposite to each other in the first direction X. The two support parts 423 can provide stable support for the cover 41.

Optionally, the shell 42 includes two second side plates 42b arranged opposite each other in the second direction Y, and both of the two second side plates 42b include a first plate part 425 and a second plate part 426, saving more material and ensuring that the shell 42 has sufficient structural strength.

Optionally, two first side plates 42a and two second side plates 42b are alternately arranged along the circumference of the shell 42 and interconnected to form a accommodating space 428.

According to some embodiments of the present application, as shown in Fig. 13, the inner surface of the first plate part 425 is formed to be recessed with respect to the inner surface of the second plate part 426 towards the exterior of the shell 42. The inner surface of the first plate part 425 refers to the surface of the first plate part 425 facing the accommodating space. The inner surface of the second plate part 426 refers to the surface of the second plate part 426 facing the accommodating space.

In these embodiments, when the shell 42 is used in the battery cell and accommodates the electrode assembly, the first plate part 425 is disposed away from the opening, the first plate part 425 is close to the position where the electrode assembly is disposed, and the first plate part 425 is recessed towards the exterior of the shell 42 to leave sufficient space for the electrode assembly to be disposed, thereby increasing the energy density of the battery cell 40.

According to some embodiments of the present application, as shown in Fig. 13, the outer surface of the first plate part 425 and the outer surface of the second plate part 426 are coplanar. The outer surface of the first plate part 425 is a surface of the first plate part 425 facing away from the accommodating space, and the outer surface of the second plate part 426 is a surface of the second plate part 426 facing away from the accommodating space.

In these embodiments, the flatness of the outer surface of the shell 42 can be improved. When the shell 42 is applied in the battery cell, the shell 42 can be disposed adjacently through the second side plate 42b, which can reduce the spacing between adjacent two battery cells 40 and reduce the total space size occupied by multiple battery cells.

Optionally, as shown in Figs. 8 to 10 and 13, when the shell 42 is used for a square battery cell, the outer surfaces of the first plate part 425 and the second plate part 426 are both planar and located on the same plane.

Optionally, as shown in Figs. 11 to 13, when the shell 42 is used for a cylindrical battery cell, the outer surfaces of the first plate part 425 and the second plate part 426 are both curved and have the same curvature.

According to some embodiments of the present application, the area of the first side plate 42a is smaller than the area of the second side plate 42b.

In these embodiments, the thickened part 422 and the support part 423 are arranged in the first side plate 42a with a smaller area, so that the first side plate 42a with a smaller area is convex, while the outer surface of the second side plate 42b with a larger area can be more flat. When the shell 42 is used for a square battery cell, it allows two adjacent battery cells to face each other through the side plate with a larger area.

According to some embodiments of the present application, as shown in Fig. 13, the first plate part 425 and the second plate part 426 are connected through the second transition part 427. In the direction from the first plate part 425 to the second plate part 426, the wall thickness of the second transition part 427 gradually increases.

In these embodiments, by disposing the second transition part 427, it is possible to improve the stress concentration caused by a sudden change in thickness between the first plate part 425 and the second plate part 426. At the same time, it can also improve the problem of large edges and corners caused by sudden changes in thickness between the first plate part 425 and the second plate part 426, which makes the shell 42 easy to be scratched or make the electrode assembly 43 located inside the shell 42 easy to be scratched by the shell 42.

There are various ways to connect the second transition part 427 with the first plate part 425 and the second plate part 426. The second transition part 427 can be welded with the first plate part 425, or the second transition part 427 can be provided to be integrally formed with the first plate part 425. The second transition part 427 can be welded and connected with the second plate part 426, or the second transition part 427 can be provided to be integrally formed with the second plate part 426.

Optionally, the second transition part 427, the first plate part 425, and the second plate part 426 are disposed to be integrally formed, which can improve the connection strength between the second transition part 427 and the first plate part 425 and between the second transition part 427 and the second plate part 426.

According to some embodiments of the present application, as shown in Fig. 13, the extension size H1 of the second plate part 426 in the direction from the first plate par 425 to the second plate part 426 is 2-10mm. The direction from the first plate part 425 to the second plate part 426 is the height direction Z of the shell 42.

In these embodiments, when the extension size H1 of the second plate part 426 in the height direction Z is within the above range, it can not only improve the structural strength of the shell 42 due to the insufficient extension size H1 of the second plate part 426, but also improve the energy density of the battery cell 40 affected by the overlarge extension size H1 of the second plate part 426.

According to some embodiments of the present application, as shown in Fig. 13, the extension size H2 of the second transition part 427 in the direction from the first plate part 425 to the second plate part 426 is 1.5mm~20mm.

In these embodiments, when the extension size H2 of the second transition part 427 in the height direction Z is within the above range, it can not only improve the sudden change of the thickness between the first plate part 425 and the second plate part 426 caused by the insufficient extension size H2 of the second transition part 427, but also improve the energy density of the battery cell affected by the overlarge extension size H2 of the second transition part 427.

According to some embodiments of the present application, as shown in Fig. 13, the wall thickness T2 of the second plate part 426 is 0.4mm~1.0mm, and/or the wall thickness T1 of the first plate part 425 is 0.3mm~1.0mm.

In these embodiments, when the wall thickness of the second plate part 426 and/or the first plate part 425 is within the above range, it can not only improve the insufficient structural strength of the shell 42 caused by the insufficient thickness of the second plate part 426 and/or the first plate part 425, but also improve the energy density of the battery cell 40 affected by the overlarge thickness of the second plate part 426 and/or the first plate part 425.

According to some embodiments of the present application, the difference in wall thickness between the second plate part 426 and the first plate part 425 is 0.1mm~0.5mm, and/or the ratio of wall thickness between the second plate part 426 and the first plate part 425 is 1-1.5.

In these embodiments, when the wall thicknesses of the second plate part 426 and the first plate part 425 meet the above relationship, it can not only improve the problem of stress concentration caused by the overlarge difference in thickness between the first plate part 425 and the second plate part 426, but also improve the insufficient strength of the shell 42 caused by the too small difference in thickness between the first plate part 425 and the second plate part 426.

Please continue to refer to Figs. 6 and 7. According to some embodiments of the present application, the present application also provides a battery cell 40, which includes a cover 41 and a shell 42. The shell 42 can be the shell 42 of any of the above embodiments. As shown in Figs. 8 to 15, the support part 423 of the shell 42 supports the cover 41. Since the battery cell 40 of the embodiments of the present application includes the aforementioned shell 42, the battery cell 40 of the embodiments of the present application has the beneficial effects of the aforementioned shell 42, and will not be further described here.In some embodiments, the shell 42 includes a first side plate 42a and a second side plate 42b that are circumferentially arranged around the opening and connected to each other, the body part 421, the thickened part 422, and the support part 423 are arranged in the first side plate 42a, and the second side plate 42b includes a first plate part 425 and a second plate part 426 located on the side of the first plate part 425 facing the opening. The thickness of the first plate part 425 is less than the thickness of the second plate part 426.

The battery cell 40 further includes an electrode assembly 43 located in the accommodating chamber. In a direction perpendicular to the second side plate 42b, the projection of the electrode assembly 43 and the projection of the second plate part 426 do not overlap.

In the direction perpendicular to the second side plate 42b, by making the projection of the electrode assembly 43 and the projection of the second plate part 426 not overlap, the thickening second plate part 426 and the electrode assembly 43 are misaligned, and the second plate part 426 will not interfere with the electrode assembly 43.

According to some embodiments of the present application, the present application further provides a battery including a battery cell as described in any of the above solutions.

According to some embodiments of the present application, the present application further provides an electricity consuming device including a battery as described in any of the above solutions, and the battery is used to provide electrical energy to the electricity consuming device.

The electricity consuming device can be any of the aforementioned devices or systems that use batteries.

Please refer to Figs. 8 to 13, which are structural schematic diagrams of a shell 42 provided in the embodiments of the present application. The shell 42 includes a body part 421 and a thickened part 422 which is connected to the body part 421, and arranged at the opening of the shell 42. At least portion of the thickened part 422 has a wall thickness larger than that of the body part 421, wherein the thickened part 422 is provided with a support part 423, which is configured to support the cover 41 closing the opening. The thickened part 422 includes a first part 422a and a second part 422b. The first part 422a is located on the side of the second part 422b facing away from the opening, and the wall thickness of the second part 422b is smaller than the wall thickness of the first part 422a to form a support part 423. The support part 423 is located on the inner side of the shell 42. The outer surface of the first part 422a is coplanar with the outer surface of the second part 422b. The outer surface of the body part 421 is arranged to be recessed towards the interior of the shell 42 relative to the outer surface of the thickened part 422. The thickened part 422 and the body part 421 are connected through the first transition part 424, and the wall thickness of the first transition part 424 gradually increases along the direction from the body part 421 to the thickened part 422. The inner surface of the body part 421, the inner surface of the first transition part 424, and the inner surface of the second part 422b are coplanar. The ratio of the wall thickness of the first part 422a to the wall thickness of the body part 421 is 1-1.5. The shell 42 includes multiple side plates that are connected to each other, and the multiple side plates includes a first side plate 42a and a second side plate 42b that are connected to each other. The body part 421, a thickened part 422, and a support part 423 are arranged in the first side plate 42a. The second side plate 42b includes a first plate part 425 and a second plate part 426 located on the side of the first plate part 425 facing the opening. The thickness of the first plate part 425 is less than that of the second plate part 426. The inner surface of the first plate part 425 is formed by recessing toward the exterior of the shell 42 relative to the inner surface of the second plate part 426. The outer surface of the first plate part 425 and the outer surface of the second plate part 426 are coplanar, and the area of the first side plate 42a is smaller than that of the second side plate 42b. The first plate part 425 and the second plate part 426 are connected through the second transition part 427, and the wall thickness of the second transition part 427 gradually increases in the direction from the first plate part 425 to the second plate part 426.

Finally, it should be noted that the above embodiments are only used to illustrate the technical solution of present application and not to limit it. Although the present application has been described in detail with reference to the aforementioned embodiments, ordinary technical personnel in the art should understand that they can still modify the technical solutions recorded in the aforementioned embodiments, or equivalently replace some or all of the technical features. These modifications or substitutions do not separate the essence of the corresponding technical solutions from the scope of the technical solutions of the various embodiments of present application, and they should all be covered within the scope of the claims and specifications of present application. Especially, as long as there is no structural conflict, the various technical features mentioned in each embodiment can be combined in any way. The present application is not limited to the specific embodiments disclosed in the text, but includes all technical solutions falling within the scope of the claims.

## Claims

1. A shell comprising:
a body part, and
a thickened part connected to the body part and arranged at an opening of the shell, at least part of the thickened part having a wall thickness larger than that of the body part,
wherein the thickened part is provided with a support part configured to support a cover that closes the opening.

2. The shell according to claim 1, **characterized in that** the thickened part comprises a first part and a second part, the first part is located between the second part and the body part, and a wall thickness of the second part is smaller than that of the first part to form the support part.

3. The shell according to claim 2, **characterized in that** the support part is located on an inner side of the shell.

4. The shell according to claim 2, **characterized in that** the support part comprises a support surface for supporting the cover, and an extension size of the support surface along a circumferential direction of the opening is 0.05mm-2mm.

5. The shell according to claim 3 or 4, **characterized in that** an outer surface of the first part and an outer surface of the second part are arranged to be coplanar.

6. The shell according to claim 5, **characterized in that** an outer surface of the body part is disposed to be recessed towards an interior of the shell relative to an outer surface of the thickened part.

7. The shell according to claim 6, **characterized in that** the thickened part and the body part are connected through a first transition part and a wall thickness of the first transition part gradually increases along a direction from the body part to the thickened part.

8. The shell according to claim 7, **characterized in that** an inner surface of the body part, an inner surface of the first transition part, and an inner surface of the second part are coplanar.

9. The shell according to claim 7, **characterized in that** an extension size of the first transition part is 2mm~20mm in the direction from the body part to the thickened part.

10. The shell according to claim 2, **characterized in that** a wall thickness of the first part is 0.6mm~1.2mm, and/or the wall thickness of the second part is 0.4mm~1mm, and/or a wall thickness of the body part is 0.5mm~1.0mm.

11. The shell according to claim 2, **characterized in that** a ratio of a wall thickness of the first part to a wall thickness of the body part is 1-1.5.

12. The shell according to claim 1, **characterized in that**
an extension size of the thickened part in a direction from the body part to the thickened part is 2mm~12mm.

13. The shell according to claim 1, **characterized in that** the shell comprises multiple side plates connected to each other, and the body part, the thickened part, and the support part are arranged in at least one of the side plates.

14. The shell according to claim 13, **characterized in that** the multiple side plates comprise a first side plate and a second side plate connected to each other, the body part, the thickened part, and the support part are arranged in the first side plate, the second side plate comprises a first plate part and a second plate part located on a side of the first plate part facing the opening, and a thickness of the first plate part is less than a thickness of the second plate part.

15. The shell according to claim 14, **characterized in that** an inner surface of the first plate part is formed by recessing towards an exterior of the shell relative to an inner surface of the second plate part.

16. The shell according to claim 14, **characterized in that** an outer surface of the first plate part and an outer surface of the second plate part are arranged to be coplanar.

17. The shell according to claim 14, **characterized in that** an area of the first side plate is smaller than an area of the second side plate.

18. The shell according to claim 14, **characterized in that** the first plate part and the second plate part are connected through a second transition part, and a wall thickness of the second transition part gradually increases in a direction from the first plate part to the second plate part.

19. The shell according to claim 18, **characterized in that** an extension size of the second plate part in the direction from the first plate part to the second plate part is 2-10mm; and/or, an extension size of the second transition part in the direction from the first plate part to the second plate part is 1.5mm~20mm.

20. The shell according to claim 14, **characterized in that** a wall thickness of the second plate part is 0.4mm~1.0mm; and/or, a wall thickness of the first plate part is 0.3mm~1.0mm.

21. The shell according to claim 14, **characterized in that** a difference between a thickness of the second plate part and a thickness of the first plate part is 0.1mm~0.5mm; and/or, a ratio of the thickness of the second plate part to the thickness of the first plate part is 1-1.5.

22. A battery cell, comprising:
a cover; and
the shell according to any one of claims 1-21, wherein the support part of the shell supports the cover.

23. The battery cell according to claim 22, **characterized in that**
the shell comprises a first side plate and a second side plate arranged around the opening and connected to each other, the body part, the thickened part, and the support part are arranged in the first side plate, the second side plate comprises a first plate part and a second plate part located on a side of the first plate part facing the opening, and a thickness of the first plate part is less than a thickness of the second plate part;
the battery cell further comprises an electrode assembly located in an accommodating chamber, and a projection of the electrode assembly and a projection of the second plate part do not overlap in a direction perpendicular to the second side plate.

24. A battery, **characterized by** comprising a casing and multiple battery cells as claimed in any one of claims 22-23, wherein the battery cells are accommodated within the casing.

25. An electricity consuming device, **characterized in that** the electricity consuming device comprises a battery cell as claimed in any one of claims 22-23, and the battery cell is configured to provide electrical energy.
